# EUROPEAN PATENT APPLICATION

(11) **EP 1 113 541 A2**
(43) Date of publication of application: **04.07.2001**
(21) Application number: 00311054.1
(22) Date of filing: 12.12.2000
(51) Int. Cl.: H01S 3/30, H01S 3/067

(54) **Raman amplified optical amplifier**

(30) Priority: 30.12.1999 US 476437
(71) Applicant: LUCENT TECHNOLOGIES INC., Murray Hill, New Jersey 07974-0636 (US)
(72) Inventor: Srivastava, Atul Kumar, Edison, New Jersey 08820 (US); Sulhoff, James William, Ocean, New Jersey 07712 (US); Sun, Yan, San Mateo, California 94025-6931 (US)
(74) Representative: Watts, Christopher Malcolm Kelway, Dr.

(57) **Abstract**

An optical amplifier employing a Raman pump that imparts a number of desirable characteristics while reducing the noise figure. As a result of its desirable characteristics, such Raman pumped optical amplifiers may be used in dense WDM communications systems.

## Description

### FIELD OF THE INVENTION

The present invention relates generally to the field of optical communications and in particular to an improved Raman amplified, erbium-doped fiber amplifier.

### BACKGROUND OF THE INVENTION

The demand for higher capacity transmission systems generated by the evolution of voice and data networks has led to the development of multiwavelength, wavelength-division-multiplexed (WDM) optical communication systems and networks having a large number of individual channels. (See, e.g., Y. Sun, J.B. Judkins, A.K. Srivastava, L. Garrett, J.L. Zyskind, J.W. Sulhoff, C. Wolf, R.M. Derosier, A.H. Gnauck, R.W. Tkach, J. Zhou, R.P. Espindola, A.M. Vengsarkar, and A.R. Chraplyvy, "Transmission of 32-WDM 10-Gb/s Channels Over 640 Km using Broad Band, Gain-Flattened Erbium-Doped Silica Fiber Amplifiers, " IEEE Photon. Tech. Lett., Vol. 9, No. 12, pp. 1652-1654, December 1997; and A.K. Srivastava, Y.Sun, J.W. Sulhoff, C. Wolf, M. Zirngibl, R. Monnard, A.R. Chraplyvy, A.A. Abramov, R.P. Espindola, T.A. Strasser, J.R. Pedrazzini, A. M. Vengarkar, J.L. Zyskind, J. Zhou, D.A. Ferrand, P.F. Wysocki, J.B. Judkins and Y.P. Li, "1 Tb/s Transmission of 100 WDM 10-Gb/s Channels Over 400 Km of TRUEWAVE Fiber", OFC Technical Digest, Postdeadline Papers, PD 10-1-10-4, San Jose, CA, February 22-27, 1998; P. B. Hansen and L. Eskildsen, Optical Fiber Technology, Vol. 3, pp.221-237, 1997; and A. K. Srivastava, L.Zhang, Y. Sun and J. W. Sulhoff, Proc. OFC'99, Paper FC2, pp. 53-55, San Diego, CA 1999.

Appropriately, rare earth-doped optical fiber amplifiers are used to amplify optical signals used in such communications systems and networks. These rare earth-doped optical fiber amplifiers are found to be cost effective, exhibit low-noise, provide relatively large bandwidth which is not polarization dependent, display substantially reduced crosstalk, and present low insertion losses at relevant operating wavelengths. As a result of their favorable characteristics, rare earth-doped optical fiber amplifiers, e.g., erbium-doped fiber amplifiers (EDFAs), are replacing current optoelectronic regenerators in many optical lightwave communications systems and networks.

Accordingly, due to their broad application and importance, a continuing need exists for improved rare earth-doped fiber amplifiers and in particular, improved erbium-doped fiber amplifiers.

### SUMMARY OF THE INVENTION

We have developed a Raman amplified optical amplifier that advantageously improves the noise figure of the amplifier as a result of a Raman pump which is provided within the amplifier itself. Advantageously, such amplifiers have wide applicability in dense wavelength division multiplexed transmission systems.

Further features and advantages of the present invention, as well as the structure and operation of various embodiments of the present invention are described in detail below with reference to the accompanying drawing.

### BRIEF DESCRIPTION OF THE DRAWING

Fig. 1 is schematic of a multi-stage optical amplifier which may serve as a foundation for the present invention; and

Fig. 2 is a schematic of a Raman amplified optical amplifier according to the present invention; and

Fig. 3 is a schematic of an exemplary WDM transmission system including Raman amplified optical amplifiers according to the present invention.

### DETAILED DESCRIPTION OF THE INVENTION

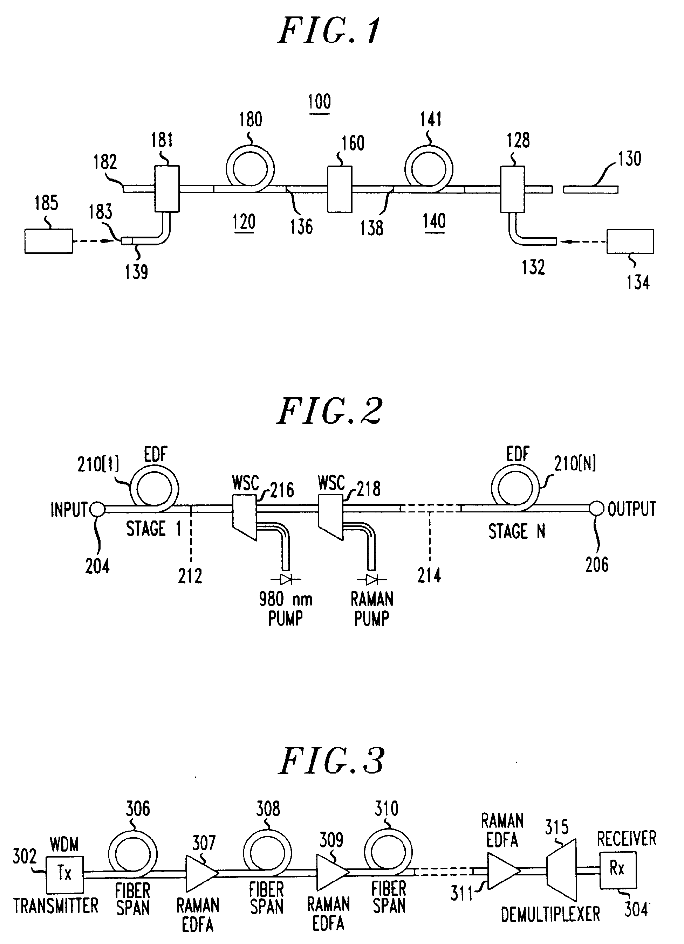

Fig. 1 illustrates the basic principles of a multi-stage optical amplifier which serves as the foundation for our invention. Specifically, and with reference now to that figure, optical amplifier 100 includes two separate and distinct stages of amplification which are separated by an optical element such as an optical isolator. The first stage of amplification 120 is coupled to a second stage of amplification 140 through a passive element 160 such as an optical isolator, an optical filter, or the like. The first stage 120 may comprise a doped amplifying fiber 180 coupled via a coupler 181 to both an input port 182 and to a pump port 183 for receiving energy from a pump 185 such as a laser diode pump. Coupler 181 may be a multiplex/demultiplex type of filter or an optical interference filter manufactured by, for example JDS Optics of Ottowa, Canada.

The second stage 140 of the multi-stage amplifier may comprise a second doped amplifying fiber 141 coupled via coupler 128 to both an output port 130 for providing a signal which has been amplified and to a pump port 132 for receiving energy from a laser diode pump 134. Similar to the first stage, coupler 128 can be a multiplex (demultiplex) type of filter or an optical interference filter manufactured by, for example, JDS Optics.

The output port 136 of the fiber 180 is coupled to the input port 138 of fiber 141 via a passive optical element 160. The optical element 160 can be an optical isolator of an optical filter or both. The optical isolator can take the form of an optical diode which permits optical energy to travel from the first stage 120 to the second stage 140, but restricts the travel of optical energy in the opposite direction. The optical filter can take the form of a multiplexer which can be made from a diffraction grating, a thin film, or a filter which can restrict the amplified spontaneous emission (ASE) and/or has filtering characteristics for modifying the gain characteristics of the multi-stage amplifier or other type of filter which reduces energy in the form of spontaneous emission from flowing between the two stages and causing saturation of either stage. The optical isolator and or the optical filter can be coupled to the optical fibers of the first stage 120 and the second stage 140 either optically, by fusion, by splicing or other means.

Light from laser diode pump 185 can be launched into the first stage 120 via a lens located at the pump port 183 . A filter such as a holographic grating 139 can be formed in the fiber between the end 183 and the coupler 181 to reject an undesired mode from the laser diode pump by providing backscattering.

As noted above, the coupler 181 is constructed to couple both the input signal received by input port 182 and the pump signal received by the pump port 183 to amplifying fiber 180. In a similar manner, coupler 128 is constructed to pass the amplified signal from the multistage amplifier to the output port 130 and to couple the pump signal received by pump port 132 to amplifying fiber 141.

In operation, an optical signal which is to be amplified is coupled by some convenient means such as, for example, optically or the like to input port 182 and a pump signal is coupled to pump port 139 and pump port 132. The received optical signal amplified by the Erbium-doped fiber amplifier 180 of the first stage 120 of the optical fiber amplifier is couple to the input port of the second stage 140 of the optical amplifier 100 via passive optical element.

It is to be understood that the Erbium-doped fiber amplifier 180 of the first stage 120 can be pumped from either or both ends and that the Erbium-doped fiber amplifier 141 of the second stage 140 can also be pumped from either or both ends. This being so, the laser diode and a multiplexer for pumping the first and second stages 120, 140 of the optical amplifier 100 can be fabricated on a single substrate can include the passive optical element or elements such as an optical isolator and/or an optical fiber.

Fig. 2 is a schematic which illustrates the basic principle of our Raman amplified, optical amplifier which is the subject of the present invention. The optical amplifier shown there 200, is divided primarily into a number of stages 202[1] ... 202[N]. Briefly stated, optical signals enter an input of the optical amplifier 204 and exit an output 206 after traversing the multiple stages 202[1] ... 202[N]. As is shown in this exemplary structure 200, the stages include a section of Rare Earth, i.e, Erbium-doped fiber 210[1] ... 210[N].

Shown further in Fig. 2, the first stage 202[1] of the amplifier 200 is pumped by an optical pump at an appropriate wavelength such as 980nm. As can be appreciated, there is some design freedom in the choice of the pump. The pump shown 212, is shown exemplary as 980nm, which will maintain a high inversion level resulting in a low noise figure. The pump is coupled to a stage of the optical amplifier 200 via wavelength selective coupler 216.

Shown further in Fig. 2, and the subject of the present invention, is a Raman pump 214, coupled to a stage of the amplifier 200 via wavelength selective coupler 218. The Raman pump may advantageously be a laser device of a number of wavelengths, although for the purposes of our exemplary embodiment, 1400 to 1550nm.

While not explicitly shown in Fig. 2, the Raman pump 214 may be coupled to the optical amplifier 200 in any of the stages 202[1] ... 202[N], although a mid-stage is perhaps the most convenient. As such, the 980nm pump wavelength selective coupler 216 should be transparent at Raman wavelength with very small insertion loss. Amplifiers constructed according to our inventive teachings the input signal power will be larger (due to the Raman gain) and the presence of a Raman pump at a wavelength longer than the 980nm pump 212 will further increase the inversion level of the first stage of the exemplary amplifier shown in Fig. 2. As can be further appreciated, the inversion level in such a first stage is kept high to improve the noise figure of the amplifier.

Finally, and with reference now to Fig. 3., there is shown in schematic form an exemplary wavelength-division multiplexed (WDM) transmission system incorporating our inventive Raman amplified optical amplifiers. Specifically, transmission system 300 which interconnects transmitter 302 with receiver 304 includes a number of fiber spans 306, 308 and 310 each interconnected by Raman amplified optical amplifiers 307, 309, and 311, which are shown illustratively as Erbium-doped fiber amplifiers, and demultiplexer 315. In operation, wavelength division multiplexed optical signals (not shown) emanate from transmitter 302 traverse the multiple fiber spans 306, 308 and 310 as they are amplified by our inventive Raman amplified optical amplifiers 307, 309 and 311. The signals are subsequently demultiplexed through the action of demultiplexer 315 and then received by receiver 304. As can be readily appreciated, optical fiber spans and component materials, transmitters 302, demultiplexers 315 and receivers 304 are all well known and their actual embodiment in a particular application is largely a matter of design choice.

With continued reference to Fig. 3, at each of the amplifiers 307, 309 and 311, and according to our inventive teachings and consistent with our discussion of Fig. 2, high power Raman pump is sent through a transmission fiber which acts as a gain medium for the Raman amplification. Raman pump and optical signals will propagate through the transmission system in opposite directions. As should now be apparent and a result of our inventive teachings, the use of Raman amplification within the optical amplifier improves a noise-figure of the amplifier thereby improving the overall system margin.

## Claims

1. An optical amplifier CHARACTERIZED BY:
a means for providing Raman amplification within the optical amplifier.

2. The optical amplifier of claim 1 further comprising:
a plurality of amplification stages.

3. The optical amplifier of claim 2 wherein said Raman amplification means is positioned within a mid-stage of the plurality of stages.

4. A method of enhancing the performance of an optical amplifier, said method CHARACTERIZED BY:
amplifying, via a Raman amplification means, optical signals within the optical amplifier.

5. The method according to claim 5 wherein the Raman amplification means provides a counter-propagating Raman pump.

6. A multi-stage optical amplifier comprising:
a first stage of amplification including a rare-earth doped amplifying fiber;
a second stage of amplification including a rare-earth doped amplifying fiber; and
a middle stage of amplification, interposed between the first and second amplifying stages, the middle stage of amplification including a means for providing Raman amplification.

7. The optical amplifier according to claim 6 wherien said Raman amplification means provides a counter-propagating Raman pump.

8. An arrangement for transmitting optical signals, said arrangement comprising:
a transmitter;
a receiver, optically coupled to the transmitter; and
an optical amplifier, interposed between and optically coupled to the transmitter and the receiver, wherein said optical amplifier includes a Raman pump.
